Europäisches Patentamt

(19) European Patent Office

Office européen des brevets

(11) Publication number: **0 154 228**
**A2**

## (12) EUROPEAN PATENT APPLICATION

(21) Application number: **85101644.4**

(22) Date of filing: **15.02.85**

(51) Int. Cl.⁴: **B 23 K 9/00**

(30) Priority: **28.02.84 US 584423**

(43) Date of publication of application:
**11.09.85 Bulletin 85/37**

(84) Designated Contracting States:
**BE CH DE FR GB IT LI SE**

(71) Applicant: **WESTINGHOUSE ELECTRIC CORPORATION**
**Westinghouse Building Gateway Center**
**Pittsburgh Pennsylvania 15222(US)**

(72) Inventor: **Persang, Joseph Charles**
**2781 Homehurst Avenue**
**Pittsburgh Pennsylvania 15234(US)**

(74) Representative: **Patentanwälte Dipl.-Ing. R. Holzer**
**Dipl.-Ing. (FH) W. Gallo**
**Philippine-Welser-Strasse 14**
**D-8900 Augsburg(DE)**

(54) Electrode for disintegrating metallic material.

(57) A graphite electrode is provided for disintegrating and removing metallic material from a workpiece, e.g., such as portions of a nuclear reactor to be repaired while in an underwater and/or radioactive environment. The electrode is provided with a plurality of openings extending outwardly, and a manifold for supplying a mixture of water and compressed gas to be discharged through the openings for sweeping away the disintegrated metallic material during use of the electrode.

EP 0 154 228 A2

./...

FIG. I

0154228

1

## ELECTRODE FOR DISINTEGRATING METALLIC MATERIAL

The present invention relates in general to an electrode for automatically disintegrating metallic material, and more particularly, to a nonconsumable electrode adapted for disintegrating metallic material in a radioactive environment upon application of a potential and utilizing a discharged mixture of a fluid and a compressed gas, for example, water and air, to facilitate the removal of the disintegrated metallic material.

Nuclear reactors, although being designed and constructed to insure their integrity during use, often require periodic repair by replacement of worn or defective metallic parts. For example, in steam generators it has been found necessary to repair various structural elements including impingement plate assemblies, tube support plates, tube sheets, and the like. In order to repair these structural elements, it is required that their damaged portions be removed and a replacement element be installed. Due to the inaccessibility of these structural elements and their location frequently in an underwater and/or radioactive environment, conventional equipment such as saws, grinders, mills, and the like are generally unusable.

To this end, the prior art has provided an electrode for disintegrating those metallic structural elements needing replacement, by application of a potential to the electrode. The application of such a potential causes disintegration of the structural elements by melting the metallic material into generally small molten particles. However, these molten particles solidify due to the presence of water or cool air at the repair site necessitating their repeated disintegration before they can ultimately be removed and the exposure of fresh underlying material to be disintegrated is exposed. As a result of the use of these prior art electrodes, the clean removal of disintegrated metallic material is often impaired resulting in higher repair and labor costs. Accordingly, it can be appreciated that there is an unsolved need for an electrode adapted for disintegrating metallic material in inaccessible radioactive locations while in an underwater and/or radioactive environment, and which facilitates the removal of the disintegrated metallic material from the structural elements being repaired.

It is broadly an object of the present invention to provide an electrode for disintegrating metallic material which overcomes or avoids one or more of the foregoing disadvantages resulting from the use of the above-mentioned prior art electrodes, and which fulfills the specific requirements of such an electrode for disintegrating metallic material while repairing structural elements in confined spaces, and while in an underwater and/or radioactive environment. Specifically, it is within the contemplation of one aspect of the present invention to provide an electrode for automatically disintegrating metallic material which facilitates the repair of structural elements by the efficient removal of the disintegrated metallic material during operation of the electrode.

The present invention provides an electrode for disintegrating metallic material which is simple to use and results in lower costs for repair of structural elements which are generally inaccessible to standard equipment such as saws, grinders, mills, and the like, the electrode being

0154228

adapted for use underwater in a radioactive environment for repair of nuclear reactors and the like.

The electrode provided by this invention constantly exposes fresh metallic material to be disintegrated, thereby improving the performance and efficiency of the electrode.

A yet still further object of the present invention is to provide an electrode for disintegrating metallic material which minimizes the amount of water required to be discharged therefrom during the use of the electrode in repairing structural elements and the like.

The invention in its broad form comprises an electrode arrangement for disintegrating metallic material from a workpiece upon application of an electrical potential to the electrode, said electrode comprising a body having a plurality of openings therein, said electrode including supplying means for supplying a mixture of a liquid and a compressed gas to be discharged through said openings for dislodging and removing disintegrated metallic material produced from said workpiece upon application of said potential to said electrode in use.

In a preferred embodiment described herein, the electrode is constructed of a body having a plurality of openings therein, and including means for supplying a mixture of a fluid and a compressed gas to be discharged through the openings for removing the metallic material disintegrated upon application of the potential.

In accordance with another embodiment of the present invention, the electrode is constructed of a body having a plurality of openings extending outwardly therein, and including a manifold supplying a mixture of a fluid and a compressed gas to be discharged through the openings, and potential applying means for applying a potential to the body, the metallic material being disintegrated upon contact of the body therewith during application of the potential, the disintegrated material being removed by the mixture discharged through the openings.

A method for disintegrating metallic material, as described herein comprises the steps of applying a potential to the metallic material to be disintegrated, and discharging a mixture of a fluid and a compressed gas into contact with the disintegrated metallic material for the removal thereof.

A more detailed understanding of the invention may be had from the following description of a preferred embodiment, to be read and understood in conjunction with the accompanying drawings wherein:

Fig. 1 is a perspective view of an electrode for disintegrating metallic material in accordance with the present invention and showing its connection to a supply of a mixture of a fluid and a compressed gas and a source of electrical potential;

Fig. 2 is a side elevational view in partial cross section showing the electrode of Fig. 1 constructed of a manifold adapted for receiving a rectangular planar body having a plurality of openings extending therethrough;

Fig. 3 is a top plan view of an assembly adapted for supplying a mixture of a fluid and a compressed gas to the electrode as shown in Fig. 1; and

Fig. 4 is a cross-sectional view taken along line 4-4 of Fig. 2 showing the body of the electrode being retained within the manifold and in fluid communication therewith.

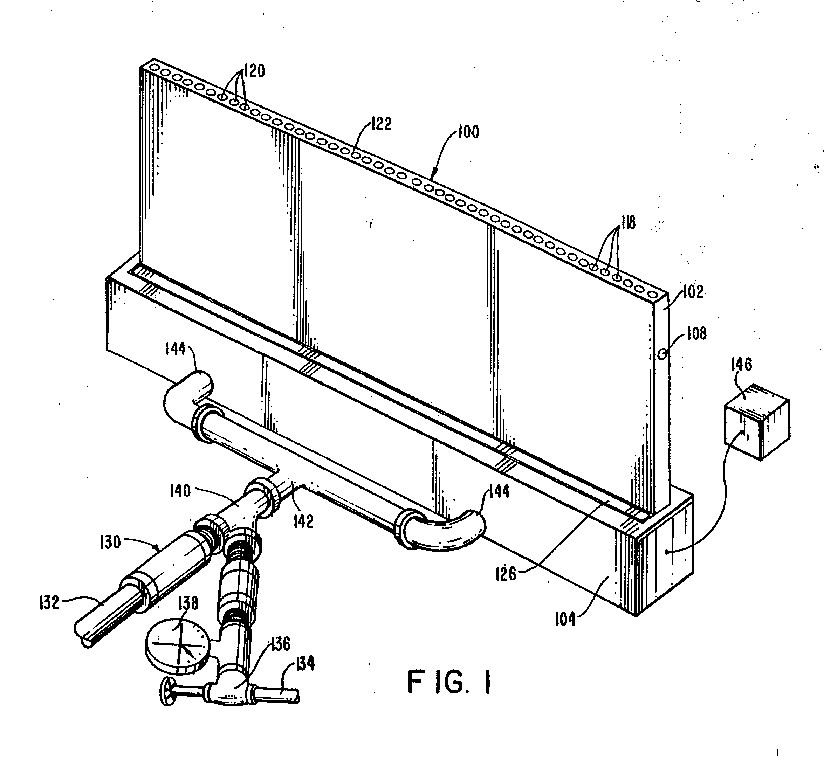

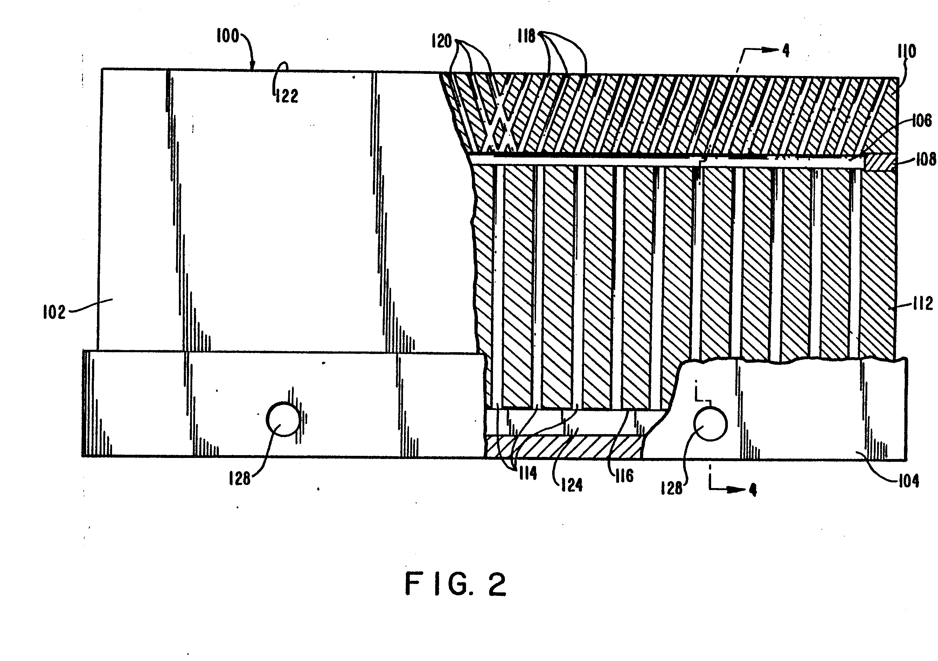

Referring now to the drawings wherein like reference numerals represent like elements, there is shown in Fig. 1 a perspective view of the electrode in accordance with the present invention for disintegrating metallic material and generally designated by reference numeral 100. As shown in Figs. 1 and 2, the graphite electrode 100 is constructed of a rectangular planar body 102 and a graphite elongated rectangular manifold 104. As shown in Fig. 2, an elongated longitudinally extending opening 106 is provided within the body 102 and having its open ends sealed by plugs 108 to prevent communication with the surrounding environment. The opening 106 divides the body 102 into an upper section 110 and a lower section 112.

The lower section 112 is provided with a plurality of parallel spaced openings 114 arranged in fluid communication between the opening 106 and the lower outer edge 116 of the body 102. The upper section 110 is provided with two sets of parallel spaced openings 118, 120 arranged in fluid communication between the opening 106 and the upper edge 122 of the body 102. The openings 118 in the first set are arranged outwardly extending towards the right as shown in Fig. 2 at an angle of approximately 17 degrees to a vertical through the body 102. Likewise, the openings 120 of the second set are arranged outwardly extending towards the left at an angle of about 17 degrees to a vertical extending through the body 102. It is to be understood that the number of openings 114 within the lower section 112, as well as the number of openings in the first set of openings 118 and second set of openings 120, may be greater or less than that illustrated. In addition, the angle at which the first set of openings 118 and second set of openings 120 make with regard to the vertical of the body 102 may be varied, as well as the number of such openings within each respective set.

The manifold 104 is provided with a longitudinally extending opening 124 adapted to receive the lower end of the body 102 as more clearly shown in Fig. 4. As the opening 124 is substantially greater than the width of the body 102, a brass gib 126 is provided as a spacer. In the event the body 102 wears out or becomes damaged during use, it can be conveniently replaced by removing it from its attachment within the manifold 104 upon first removal of the gib 126. As shown in Fig. 4, the plurality of openings 114 are arranged in fluid communication with the opening 124 within the manifold 104. A pair of threaded openings 128 are provided within the side of the manifold 104 and in fluid communication with the opening 124 and openings 114 for supplying a mixture of a fluid and compressed gas to be discharged through the plurality of openings 118, 120.

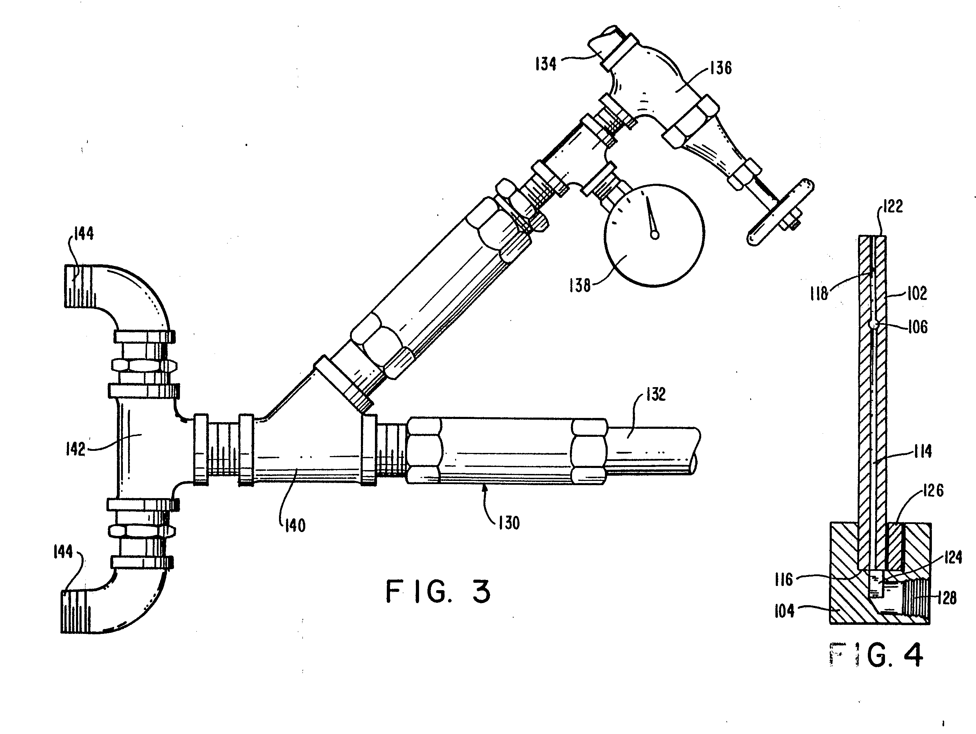

A supply of a fluid such as water and a compressed gas such as air or an inert gas is provided by a mixing apparatus generally designated by reference numeral 130. As shown in Fig. 3, the mixing apparatus 130 is constructed of a fluid inlet 132 and a compressed gas inlet 134. The pressure of the compressed gas is controlled by a valve 136 and pressure gauge 138. The supplied fluid and compressed gas are generally mixed in the region of a Y-shaped fitting 140, and the mixture is supplied to a manifold 142 having a pair of outlet openings 144 adapted to be threadingly received within the openings 128 of the manifold 104.

In operation, the electrode 100 is initially connected to an electrical source 146 such as one rated for application of 300 amps at 28 to 30 volts a.c. The electrode 100 is positioned adjacent the structural element to be disintegrated, such as underwater in a radioactive environment adjacent a nuclear reactor. Water is supplied to the electrode 100 through the fluid inlet 132 at a rate in the range of about 4-8 gallons per minute and preferably at a rate of about 8 gallons per minute. Compressed air at a pressure in the range of about 10-60 psi, preferably in the range of about 10-20 psi, and a preferred pressure of about 15 psi is supplied through the compressed gas inlet 134 and mixed with the water within the manifold 142 to be supplied to the electrode 100. The mixture of water and compressed air are discharged through the openings 118, 120 within the upper section 110 of the electrode 100. As the upper edge 122 of the electrode 100 is positioned adjacent a metallic structural element to be disintegrated, the close proximity of the electrode causes the striking of an arc under the applied potential to cause the metallic material in the region adjacent the upper edge to be disintegrated by melting. The disintegrated metallic material is formed into small beads which are flushed away under the action of the mixture of water and compressed air being discharged from the electrode 100. As the openings 118, 120 within the electrode 100 are directed outwardly to the right and left, the thus formed beads of disintegrated metallic material are swept out to the sides of the electrode and away from that region defined by the upper edge 122. In this manner, the disintegrated metallic material is prevented from solidifying (at its site of origin) and from obstructing the top edge 122 of the electrode by being continuously removed by action of the mixture of water and compressed air so as to expose fresh underlying metallic material to be disintegrated. As a result of the construction and operation of the electrode 100 in accordance with the present invention, the disintegrating time has been reduced by about 25 percent over the prior art electrodes and method of using same.

Although the invention herein has been described with reference to particular embodiments, it is to be understood that these embodiments are merely illustrative of the principals and application of the present invention. It is therefore to be understood that numerous modifications may be made in the illustrative embodiments and that other arrangements may be devised without departing from the spirit and scope of the present invention as defined by the appended claims.

CLAIMS:

1. An electrode arrangement for disintegrating metallic material from a workpiece upon application of an electrical potential to the electrode, said electrode comprising a body having a plurality of openings therein, said electrode including supplying means for supplying a mixture of a liquid and a compressed gas to be discharged through said openings for dislodging and removing disintegrated metallic material produced from said workpiece upon application of said potential to said electrode in use.

2. The electrode of Claim 1, wherein said openings are disposed at an angle to an axis of said body.

3. The electrode of Claim 1, further including an opening extending within said body and arranged in common fluid communication with said plurality of openings.

4. The electrode of Claim 1, wherein said supplying means comprises a manifold having an opening for removably receiving one end of said body therein.

5. The electrode of Claim 4 further including a source of a mixture of a fluid and a compressed gas in communication with said opening within said manifold.

6. The electrode of Claim 5 further including means within said body for supplying said mixture of said fluid and compressed gas from said source to said plurality of openings for discharge therefrom.

7. The electrode of Claim 1 further including means for applying an electrical potential to said body.

0154228

8. The electrode of Claim 2, wherein said openings are arranged at an angle of approximately 17 degrees to a vertical axis of said body, in use.

9. The electrode of Claim 1, wherein said plurality of openings are arranged in a first set extending outwardly in one direction and in a second set extending outwardly in an opposite direction.

10. The electrode of Claim 4, wherein said manifold includes an opening for removably securing one end of said body therein.

11. The electrode of Claim 10, wherein said opening within said manifold is in fluid communication with said plurality of openings within said body.

12. The electrode of claim 7, wherein said potential applying means comprises a potential source having a rating of about 300 amps at a voltage in the range of from 28 to 30 volts a.c.

13. A method of disintegrating metallic material from a workpiece, by using an electrode, comprising the steps of applying an electrical potential to said electrode, material to be disintegrated, placing said electrode proximate to the workpiece and discharging a mixture of a liquid and a compressed gas into contact with said disintegrated metallic material for the removal thereof.

14. The method of Claim 13, wherein said liquid comprises water and said compressed gas comprises air.

15. The method of Claim 14, wherein said liquid is discharged at a rate in the range of about 4-8 gallons per minute.

16. The method of Claim 14, wherein said liquid is discharged at a rate of about 8 gallons per minute.

17. The method of Claim 13, wherein said compressed gas is at a pressure in the range of about 10-60 psi.

18. The method of Claim 13, wherein said compressed gas is at a pressure in the range of about 10-20 psi.

19. The method of Claim 13, wherein said compressed gas is at a pressure of about 15 psi.

20. The method of Claim 13, wherein said electrical potential is about 28 to 30 volts a.c., taken from a source capable of delivering about 300 amps.

FIG. 1

0154228

FIG. 2

FIG. 3

FIG. 4

0154228